# EUROPEAN PATENT APPLICATION

(11) **EP 4 530 172 A1**
(43) Date of publication of application: **02.04.2025**
(21) Application number: 24202352.1
(22) Date of filing: 24.09.2024
(51) Int. Cl.: B62J 43/16, B62J 43/20, B62J 43/28

(54) **BATTERY ARRANGEMENT OF A STRADDLE-TYPE VEHICLE**

(30) Priority: 29.09.2023 JP 2023169518; 29.09.2023 JP 2023169519; 29.09.2023 JP 2023169520; 29.09.2023 JP 2023169521; 29.09.2023 JP 2023169522; 12.07.2024 JP 2024112304
(71) Applicant: Suzuki Motor Corporation, Shizuoka 432-8611 (JP)
(72) Inventor: KAMBAYASHI, Takahiro, Shizuoka (JP); OMOSAKO, Takahiro, Shizuoka (JP); FUKUSHIMA, Hideaki, Shizuoka (JP); SUGITA, Hisayuki, Shizuoka (JP); YAMAMOTO, Takayo, Shizuoka (JP); KISAKIBARU, Naotaka, Shizuoka (JP); KATSUYA, Yosuke, Shizuoka (JP)
(74) Representative: Haseltine Lake Kempner LLP

(57) **Abstract**

A straddle-type vehicle (1) includes a down frame (12) extending downward from a head pipe (11) at a vehicle body front portion, a pair of side frames (13) connected to a lower portion of the down frame (12), and a battery case (31) installed inside the pair of side frames (13). The pair of side frames (13) extend rearward from the down frame (12) and rise up obliquely rearward at a front side of the battery case (31). A pivot bracket (41) is provided midway in an extending direction of the pair of side frames (13), a swing arm (25) being supported by the pivot bracket (41). A suspension bracket (45) is provided at a rear portion of the pair of side frames (13), a rear suspension (28) being supported by the suspension bracket (45). The pair of side frames (13) are coupled to each other via the battery case.

## Description

### TECHNICAL FIELD

The present disclosure relates to a straddle-type vehicle.

### BACKGROUND ART

In recent years, an electric straddle-type vehicle that travels using electric power has been developed. A known example of this type of straddle-type vehicle is a scooter-type vehicle in which a battery case is installed below a seat (for example, see WO2012/043562A1). In the straddle-type vehicle disclosed in WO2012/043562A1, a down frame extends downward from a head pipe, and a pair of left and right side frames are connected to a lower portion of the down frame. The pair of side frames rise rearward toward the seat after passing through sides of the battery case. The pair of side frames are connected to each other by a plurality of bridges to increase the rigidity.

In the straddle-type vehicle disclosed in WO2012/043562A1, the pair of side frames are bent sharply behind the battery case, and therefore, an overall length of the pair of side frames becomes long. There is a problem in that the vehicle becomes heavier because the pair of side frames are long and are connected by a plurality of bridges.

### SUMMARY OF INVENTION

Aspect of non-limiting embodiments of the present disclosure relates to to provide a straddle-type vehicle capable of reducing the weight of a vehicle body while ensuring sufficient rigidity of a vehicle body frame.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided a straddle-type vehicle including:
a down frame extending downward from a head pipe at a vehicle body front portion;
a pair of side frames connected to a lower portion of the down frame; and
a battery case installed inside the pair of side frames,
in which the pair of side frames extend rearward from the down frame and rise up obliquely rearward at a front side of the battery case,
in which a pivot bracket is provided midway in an extending direction of the pair of side frames, a swing arm being supported by the pivot bracket,
in which a suspension bracket is provided at a rear portion of the pair of side frames, a rear suspension being supported by the suspension bracket, and
in which the pair of side frames are coupled to each other via the battery case.

### BRIEF DESCRIPTION OF DRAWINGS

Exemplary embodiment(s) of the present invention will be described in detail based on the following figures, wherein:
FIG. 1 is a left side view of a straddle-type vehicle according to the present embodiment.
FIG. 2 is a left side view of a vehicle body rear portion according to the present embodiment.
FIG. 3 is a longitudinal sectional view of the vehicle body rear portion in FIG. 2 taken along a center line.
FIG. 4 is a cross-sectional view of the vehicle body rear portion in FIG. 2 taken along a line A-A.
FIG. 5 is a left side view of a vehicle body rear portion according to a comparative example.

### DESCRIPTION OF EMBODIMENTS

In a straddle-type vehicle according to an aspect of the present disclosure, a down frame extends downward from a head pipe at a vehicle body front portion, a pair of side frames are connected to a lower portion of the down frame, and a battery case is installed inside the pair of side frames. The pair of side frames extend rearward from the down frame, and the pair of side frames start to rise up obliquely rearward on the front side of the battery case and extend obliquely rearward through both sides of the battery case. A pivot bracket is provided midway in an extending direction of the pair of side frames. A suspension bracket is provided at a rear portion of the pair of side frames. A swing arm is supported by the pivot bracket, and a rear suspension is supported by the suspension bracket. The lower portion of the down frame, the pivot bracket, and the suspension bracket are coupled to each other by the pair of side frames having a short frame length. Further, the pair of side frames are coupled to each other by the battery case, and the rigidity of the vehicle body frame is increased without providing a plurality of bridges. By shortening the frame length and eliminating the need for a plurality of bridges, it is possible to reduce the weight of the vehicle while ensuring sufficient rigidity of the vehicle body frame.

### Embodiment

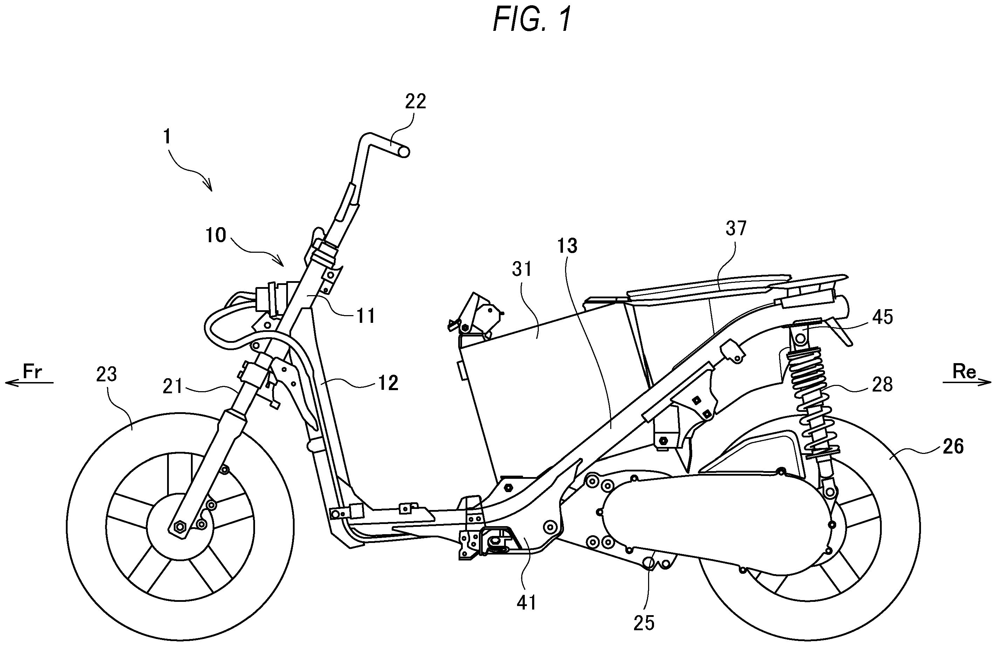

Hereinafter, a straddle-type vehicle according to the present embodiment will be described with reference to the accompanying drawings. FIG. 1 is a left side view of a straddle-type vehicle according to the present embodiment. In the following drawings, an arrow Fr indicates a vehicle front side, an arrow Re indicates a vehicle rear side, an arrow L indicates a vehicle left side, and an arrow R indicates a vehicle right side.

As shown in FIG. 1, a straddle-type vehicle 1 is constructed by attaching various covers, as a vehicle body exterior, to an underbone type vehicle body frame 10. A head pipe 11 is provided at a vehicle body front portion of the vehicle body frame 10. A down frame 12 extends rearward and obliquely downward from the head pipe 11. A pair of left and right side frames 13 are connected to a lower portion of the down frame 12. The pair of side frames 13 extend rearward and then rise up obliquely rearward. A fixed-type battery case 31 and a storage box 37 are installed inside the pair of side frames 13. A seat (not shown) is installed above the battery case 31 and the storage box 37.

A front fork 21 is steerably supported by the head pipe 11 via a steering shaft (not shown). A handle 22 is provided at an upper portion of the steering shaft. A front wheel 23 is rotatably supported at a lower portion of the front fork 21. A swing arm 25 is supported by a pivot bracket 41 on each of the pair of side frames 13. A rear wheel 26 is rotatably supported by a rear portion of the swing arm 25. Rear portions of the pair of side frames 13 and rear portions of the swing arm 25 are connected to each other via rear suspensions 28. As the swing arms 25 swing, the rear suspensions 28 expand and contract to absorb unevenness on the road surface.

In typical electric straddle-type vehicles, the energy density of a battery serving as an energy source is lower than that of gasoline, making them heavier and with a shorter range than gasoline-powered vehicles, so there is a demand for them to be lightweight. By using a battery case instead of a bridge connecting a pair of side frames, the weight can be reduced while maintaining rigidity. However, considering support positions of a swing arm and a rear suspension, an overall length of the side frame becomes longer and the weight increases. Here, in the present embodiment, the pair of side frames are connected to each other by the battery case, and the side frames rise up obliquely rearward at a front side of the battery case, thereby shortening a frame length.

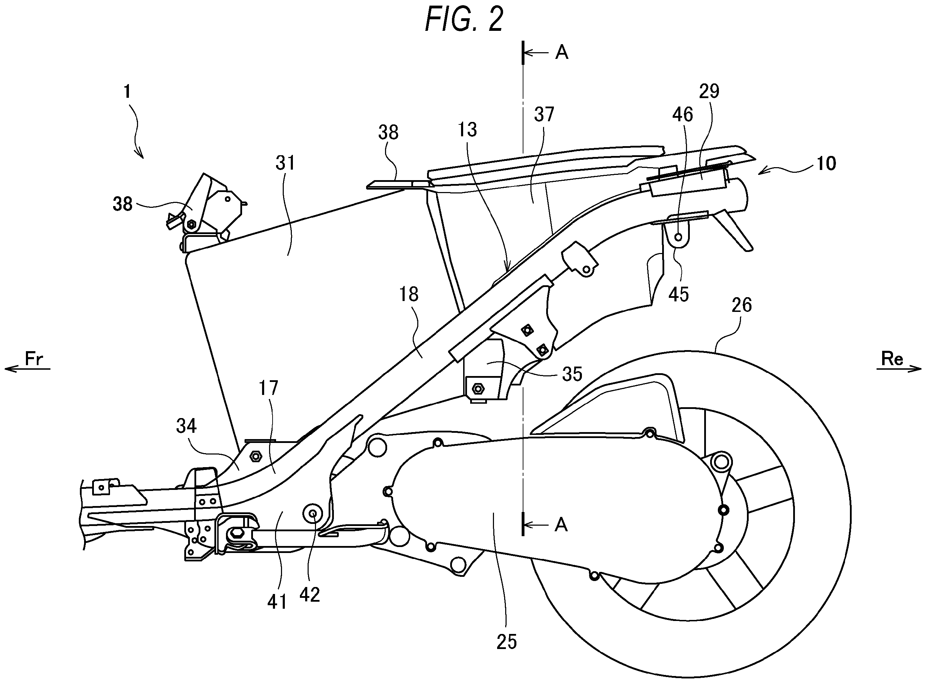

The structure of a rear portion of the straddle-type vehicle will be described below with reference to FIG. 2. FIG. 2 is a left side view of a vehicle body rear portion according to the present embodiment. FIG. 2 shows a state in which the seat, a cover, a floor board, the rear suspension and the like are omitted from the straddle-type vehicle.

As shown in FIG. 2, in the vehicle body rear portion of the straddle-type vehicle 1, the pair of left and right side frames 13 extend obliquely upward and rearward from a lower portion of the down frame 12 (see FIG. 1). The battery case 31 and the storage box 37 are installed side by side in a front-rear direction inside the pair of side frames 13. In this case, the pair of side frames 13 rise up obliquely rearward at the front side of the battery case 31, pass along both sides of the battery case 31 and the storage box 37, and extend to a rear side of the storage box 37. Thus, the pair of side frames 13 extend obliquely across the sides of the battery case 31 and the storage box 37 at a gentle inclination.

The pivot bracket 41 is provided midway in an extending direction of the pair of side frames 13. A suspension bracket 45 is provided at a rear portion of the pair of side frames 13. The swing arm 25 is swingably supported by the pivot bracket 41. An upper end portion of the rear suspension 28 (see FIG. 1) is supported by the suspension bracket 45. Thus, the pair of side frames 13 extend from the vehicle front side to the vehicle rear side so as to connect the lower portion of the down frame 12, the pivot bracket 41, and the suspension bracket 45. The pair of side frames 13 are connected to each other via the battery case 31.

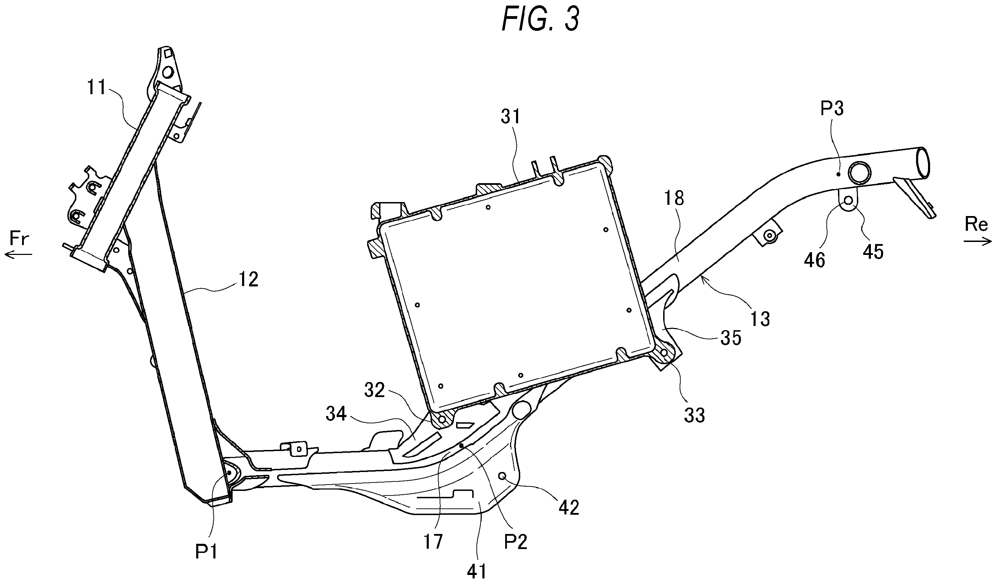

The battery case 31 is formed in a substantially rectangular shape in a side view. A plurality of cells (single cells) are housed inside the battery case 31. In the side view, the battery case 31 is tilted forward such that a lower corner on the front side of the case is the lowest, an upper corner on the rear side of the case is the highest, an upper corner on the front side of the case is the most forward, and a lower corner on the rear side of the case is the most rearward. A front fixing portion 32 (see FIG. 3) and a rear fixing portion 33 (see FIG. 3) are provided at the front and the rear of the battery case 31. The front fixing portion 32 and the rear fixing portion 33 are fixed to the pair of side frames 13 to increase the rigidity of the pair of side frames 13.

The pair of side frames 13 are curved and rise up at a curved portion 17. The rear of the curved portion 17 is an inclined portion 18 that is linearly inclined. A front bracket 34 protrudes upward from the curved portion 17 of each of the pair of side frames 13. A rear bracket 35 protrudes downward from an intermediate position of the inclined portion 18. The front fixing portion 32 of the battery case 31 is fixed to the front bracket 34. The rear fixing portion 33 of the battery case 31 is fixed to the rear bracket 35. The rear fixing portion 33 is fixed to the pair of side frames 13 at a position higher than the front fixing portion 32. The battery case 31 is supported from below by the pair of side frames 13 in a forward tilting position.

A flange 38 is provided around an opening on an upper surface of the storage box 37. A lower surface of the storage box 37 is tilted so as to avoid interference with the rear wheel 26. The front side of the flange 38 covers an upper surface of the battery case 31 at the rear side. The rear side of the flange 38 covers rear ends of the pair of side frames 13. A bridge bracket 29 is provided at the rear ends of the pair of side frames 13. A support surface of the bridge bracket 29 is located at approximately the same height as the upper corner on the rear side of the battery case 31. The front side of the flange 38 is fixed to the upper corner on the rear side of the battery case 31. The rear side of the flange 38 is fixed to the bridge bracket 29 of the pair of side frames 13.

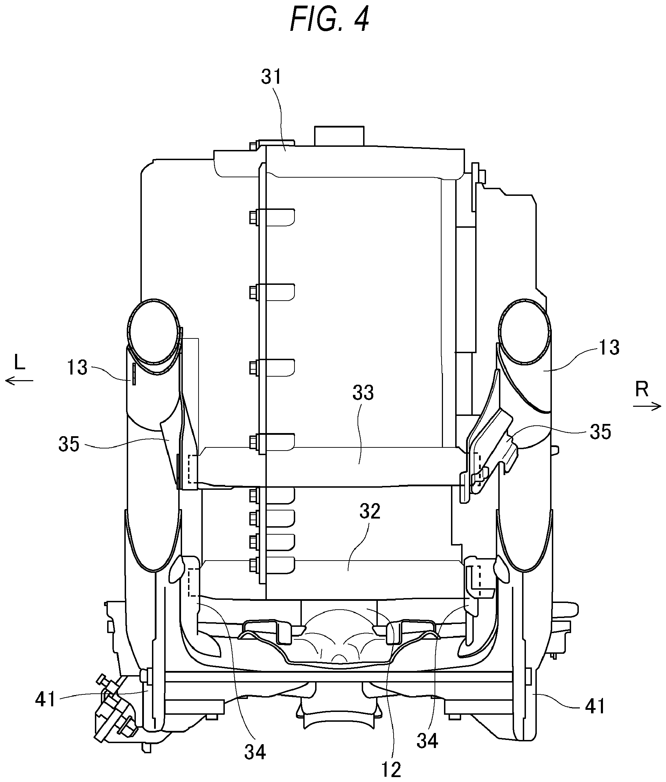

A reinforcing structure of the side frame will be described with reference to FIGs. 2 to 4. FIG. 3 is a longitudinal sectional view of the vehicle body rear portion in FIG. 2 taken along a center line. FIG. 4 is a cross-sectional view of the vehicle body rear portion in FIG. 2 taken along a line A-A. In FIGs. 3 and 4, the storage box and the swing arm are omitted.

As shown in FIGs. 2 and 3, the front bracket 34 protrudes upward from the curved portions 17 of the pair of side frames 13, and the rear bracket 35 protrudes downward from the inclined portions 18 of the pair of side frames 13. The front fixing portion 32 of the battery case 31 is fixed to the front bracket 34. The curved portions 17 of the pair of side frames 13 are coupled to each other via the front fixing portion 32. The rear fixing portion 33 of the battery case 31 is fixed to the rear bracket 35. The inclined portions 18 of the pair of side frames 13 are coupled to each other via the rear fixing portion 33. The rigidity of the curved portion 17 is increased by the front bracket 34 and the front fixing portion 32. The rigidity of the inclined portion 18 is increased by the rear bracket 35 and the rear fixing portion 33.

A front end of the front bracket 34 extends to the vicinity of a front end of the curved portion 17. A rear end of the front bracket 34 extends to the vicinity of a rear end of the curved portion 17. The front bracket 34 is provided on the pair of side frames 13 in a range the same as the curved portion 17. Thus, the rigidity of the curved portion 17 is increased. Since the front fixing portion 32 is fixed to the front bracket 34, gravity of the battery case 31 acts on the curved portions 17 of the pair of side frames 13 via the front bracket 34. The front fixing portion 32 is positioned at an intermediate position of the front bracket 34 in the front-rear direction, so that the gravity of the battery case 31 is dispersed in a wide range from the front end to the rear end of the curved portion 17, and stress concentration is prevented.

The pivot bracket 41 is provided on the curved portion 17 of each of the pair of side frames 13. The pivot bracket 41 protrudes downward from the curved portion 17. The pivot bracket 41 and the front bracket 34 are positioned on opposite sides with respect to the side frame 13. The curved portion 17 is positioned at the lowest position in the side frame 13. The pivot bracket 41 is positioned below the curved portion 17. Since the swing arm 25 (see FIG. 2) is supported at a low position below the curved portion 17 of each of the pair of side frames 13, a storage space of the battery case 31 is sufficiently secured above the side frames 13.

A front end of the pivot bracket 41 extends to the front than the curved portion 17. A rear end of the pivot bracket 41 extends to the rear than the curved portion 17. The pivot bracket 41 is provided in each of the pair of side frames 13 in a range wider than the curved portion 17, and the rigidity of the curved portion 17 is further enhanced. The swing arm 25 is supported by a swing arm pivot 42 of the pivot bracket 41, an upward thrust force is applied to the curved portions 17 of the pair of side frames 13 from the swing arms 25 via the pivot brackets 41. The rigidity of the curved portion 17 is increased by the front bracket 34, the pivot bracket 41, and the front fixing portion 32, and deformation of the curved portion 17 is restrained by the upward thrust force.

The rear brackets 35 are located midway of the inclined portions 18 of the pair of side frames 13. Although the inclined portions 18 of the pair of side frames 13 have low rigidity, the rear brackets 35 are provided midway of the inclined portions 18, so that the rear brackets 35 and the rear fixing portion 33 increase the rigidity of the inclined portions 18, and deformation of the inclined portions 18 can be restrained. The battery case 31 is supported on the pair of side frames 13 in a forward tilting position by the front bracket 34 and the rear bracket 35. At this time, a lower surface of the battery case 31 is inclined along the pair of side frames 13. A length by which the front bracket 34 and the rear bracket 35 protrude are formed to be short, and the rigidity of the front bracket 34 and the rear bracket 35 is increased.

The lower surface of the battery case 31 is inclined more gently than the pair of side frames 13. Even if the battery case 31 is tilted forward, an increase in a front-to-rear length from the upper corner on the front side of the case to the lower corner on the rear side of the case, and an increase in a height from the upper corner on the rear side of the case to the lower corner on the front side of the case are restricted. That is, an amount by which the upper corner on the front side of the case protrude forward is restricted, an amount by which the upper corner on the rear side of the case protrude upward is restricted. Therefore, the storage space for the battery case 31 is easily secured inside the pair of side frames 13. The tilting of the battery case 31 is adjusted to an angle at which interference with the swing arm 25 during swinging does not occur.

The front fixing portion 32 is provided at a front end of the lower surface of the battery case 31. The rear fixing portion 33 is provided at a rear end of the lower surface of the battery case 31. The front fixing portion 32 and the rear fixing portion 33 are provided at the corners of the battery case 31 with high rigidity, thereby increasing the rigidity of the pair of side frames 13. In the side view, the front fixing portion 32 protrudes from the front end of the lower surface of the battery case 31, and the rear fixing portion 33 protrudes from the rear end of the lower surface of the battery case 31. The front fixing portion 32 and the rear fixing portion 33 are positioned outside the case. Thus, a plurality of cells are efficiently installed inside the case. A fixing pitch of the front fixing portion 32 and the rear fixing portion 33 in the front-rear direction is large to increase the support rigidity.

As shown in FIGs. 2 and 4, the front fixing portion 32 and the rear fixing portion 33 protrude from both side surfaces of the battery case 31, in a rear view. When the vehicle rolls over, the impact is less likely to be transmitted to the battery case 31, and the cells inside the battery case 31 are protected. The front fixing portion 32 and the rear fixing portion 33 are formed in a columnar shape that is long in a vehicle width direction. The front fixing portion 32 and the rear fixing portion 33 function as bridges, and the pair of side frames 13 are coupled to each other by the front fixing portion 32 and the rear fixing portion 33, so that the rigidity of the vehicle body frame can be increased. Since a bridge is not required for the pair of side frames 13, the weight of the vehicle is reduced.

As shown in FIGs. 2 and 3, the pair of side frames 13 extend rearward from the lower portion of the down frame 12 toward the swing arm pivot 42. The pair of side frames 13 are curved and rise up in front of the front fixing portion 32, and extend obliquely rearward toward a support position 46 of the rear suspension 28 (see FIG. 1) across the middle of the lower surface and the lower rear surface of the battery case 31. The curved portions 17 of the pair of side frames 13 are positioned between the swing arm pivots 42 and the front fixing portion 32. The inclined portions 18 of the pair of side frames 13 are positioned above the rear brackets 35. The rear portion of the pair of side frames 13 is positioned above the support position 46 of the rear suspension 28.

Thus, the pair of side frames 13 extend through a front end position P1 of the lower portion of the down frame 12, a curved position P2 in the vicinity of the swing arm pivot 42, and a rear end position P3 in the vicinity of the support position 46 of the rear suspension 28. In this case, since a rising position of the pair of side frames 13 is positioned in front of the front fixing portion 32, the side frames 13 are formed short from the front end position P1 to the rear end position P3 via the curved position P2. The lower portion of the down frame 12, the pivot bracket 41, the front bracket 34, the rear bracket 35, and the suspension bracket 45 are coupled to each other by the side frame 13 having a short frame length, thereby reducing the weight of the vehicle.

As described above, according to the straddle-type vehicle 1 of the present embodiment, the pair of side frames 13 start to rise at the front side of the battery case 31 and extend obliquely rearward through both sides of the battery case 31. The lower portion of the down frame 12, the pivot bracket 41, and the suspension bracket 45 are coupled to each other by the pair of side frames 13 having a short frame length. Further, since the pair of side frames 13 are coupled to each other by the battery case 31, the rigidity of the vehicle body frame 10 is increased without providing a plurality of bridges. By shortening the frame length and eliminating the need for a plurality of bridges, it is possible to reduce the weight of the vehicle while ensuring sufficient rigidity of the vehicle body frame 10.

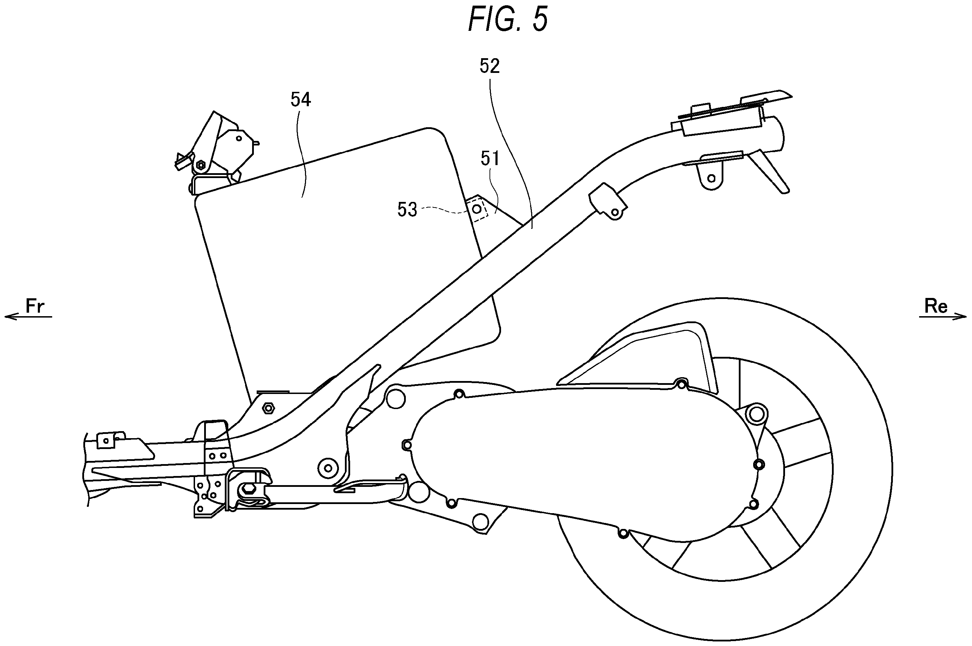

In the present embodiment, the rear bracket protrudes downward from the side frame. Alternatively, as shown in the modification of FIG. 5, a rear bracket 51 may protrude upward from a side frame 52. In this case, a rear fixing portion 53 is provided on a rear surface of a battery case 54.

Further, in the present embodiment, the battery case is formed in a substantially rectangular shape in a side view. Alternatively, a shape of the battery case is not particularly limited as long as the battery case can be installed between the side frames.

Further, in the present embodiment, the storage box is installed behind the battery case. Alternatively, components other than the storage box may be installed behind the battery case.

Further, in the present embodiment, the front fixing portion of the battery case is fixed to the side frame via a front flange. Alternatively, the front fixing portion of the battery case may be directly fixed to the side frame. Similarly, the rear fixing portion of the battery case is fixed to the side frame via a rear flange. Alternatively, the rear fixing portion of the battery case may be directly fixed to the side frame.

Further, in the present embodiment, the front fixing portion protrudes from the front end of the lower surface of the battery case, and the rear fixing portion protrudes from the rear end of the lower surface of the battery case. Alternatively, the front fixing portion and the rear fixing portion may be provided at any position of the battery case.

In the present embodiment, the battery case is supported by the pair of side frames in a forward tilting position. Alternatively, the battery case may be supported by the pair of side frames in a standing position.

Further, the vehicle body frame according to the present embodiment is not limited to the above-described straddle-type vehicle, and may be adopted in other straddle-type vehicles. The straddle-type vehicle is not limited to a general vehicle in which a driver rides on a seat in a posture straddling the seat, and includes a scooter-type vehicle in which the driver rides on the seat without straddling the seat.

As described above, according to a first aspect, a straddle-type vehicle includes: a down frame (12) extending downward from a head pipe (11) at a vehicle body front portion; a pair of side frames (13) connected to a lower portion of the down frame; and a battery case (31) installed inside the pair of side frames, in which the pair of side frames extend rearward from the down frame and rise up obliquely rearward at a front side of the battery case, a pivot bracket (41) is provided midway in an extending direction of the pair of side frames, a swing arm (25) being supported by the pivot bracket, a suspension bracket (45) is provided at a rear portion of the pair of side frames, a rear suspension (28) being supported by the suspension bracket, and the pair of side frames are coupled via the battery case. According to the configuration, the pair of side frames start to rise at the front side of the battery case and extend obliquely rearward through both sides of the battery case. The lower portion of the down frame, the pivot bracket, and the suspension bracket are coupled to each other by the pair of side frames having a short frame length. Further, since the pair of side frames are coupled to each other by the battery case, the rigidity of the vehicle body frame is increased without providing a plurality of bridges. By shortening the frame length and eliminating the need for a plurality of bridges, it is possible to reduce the weight of the vehicle while ensuring sufficient rigidity of the vehicle body frame.

A second aspect is directed to the first aspect, in which a front fixing portion (32) and a rear fixing portion (33) are provided at front and rear of the battery case, the front fixing portion and the rear fixing portion being fixed to the pair of side frames, and the pair of side frames start to rise up in front of the front fixing portion. According to the configuration, the rigidity of the pair of side frames is increased by the front fixing portion and the rear fixing portion. Since a rising position of the pair of side frames is positioned in front of the front fixing portion, the frame length is shortened.

A third aspect is directed to the second aspect, in which the pair of side frames are curved and rise up, and curved portions (17) of the pair of side frames are coupled via the front fixing portion. According to the configuration, the rigidity of the curved portions of the pair of side frames is increased by the front fixing portion.

A fourth aspect is directed to the third aspect, in which a front bracket (34) protrudes upward from a curved portion of the pair of side frames, the front fixing portion being fixed to the front bracket, and a rear bracket (35) protrudes downward from an inclined portion rearward of a curved portion of the pair of side frames, the rear fixing portion being fixed to the rear bracket. According to the configuration, the rigidity of the curved portions of the pair of side frames is increased by the front bracket and the front fixing portion, and the rigidity of the inclined portions of the pair of side frames is increased by the rear bracket and the rear fixing portion.

A fifth aspect is directed to the fourth aspect, in which the pivot bracket is provided at the curved portion of the pair of side frames. According to the configuration, the swing arm is supported by the curved portions of the pair of side frames via the pivot bracket. Therefore, an upward thrust force from the swing arm acts on the curved portions of the pair of side frames. The rigidity of the curved portion is increased by the front bracket, the pivot bracket, and the front fixing portion, and deformation of the curved portion is restrained by the upward thrust force.

A sixth aspect is directed to the fourth aspect or the fifth aspect, in which the pivot bracket is located on a side opposite to the front bracket with a curved portion of the pair of side frames interposed between. According to the configuration, the rigidity of the curved portions of the pair of side frames can be further increased by the pivot bracket. The curved portion of the side frame is positioned at the lowest position, and the pivot bracket is positioned below the curved portion. Since the swing arm is supported at a low position below the curved portions of the pair of side frames, a storage space of the battery case can be sufficiently secured above the side frames.

A seventh aspect is directed to any one of the fourth aspect to the sixth aspect, in which the rear bracket is located midway of an inclined portion (18) of the pair of side frames. According to the configuration, although the inclined portions of the pair of side frames have low rigidity, the rear brackets are provided midway of the inclined portions, so that the rear brackets and the rear fixing portion increase the rigidity of the inclined portions, and deformation of the inclined portions can be efficiently restrained.

An eight aspect is directed to any one of the fourth aspect to the seventh aspect, in which a lower surface of the battery case is inclined along the pair of side frames. According to this configuration, the length by which the front bracket and the rear bracket protrude can be shortened, and the rigidity of the front bracket and the rear bracket can be increased.

A ninth aspect is directed to the eighth aspect, in which the lower surface of the battery case is inclined more gently than the pair of side frames. According to this configuration, even if the battery case is inclined, an amount by which the battery case protrudes forward is reduced, and an amount by which the battery case protrudes upward is reduced. Therefore, the storage space of the battery case is easily secured inside the pair of side frames.

A tenth aspect is directed to any one of the second aspect to the ninth aspect, in which the front fixing portion is provided at a front end of a lower surface of the battery case, and the rear fixing portion is provided at a rear end of the lower surface of the battery case. According to the configuration, the front fixing portion and the rear fixing portion are provided at the corners of the battery case having high rigidity. It is possible to increase the rigidity of the frame by coupling the pair of side frames by the front fixing portion and the rear fixing portion.

An eleventh aspect is directed to the tenth aspect, in which the front fixing portion protrudes from the front end of the lower surface of the battery case, and the rear fixing portion protrudes from the rear end of the lower surface of the battery case. According to the configuration, a fixing pitch of the front fixing portion and the rear fixing portion in the front-rear direction is large to increase the support rigidity.

A twelfth aspect is directed to the tenth aspect or the eleventh aspect, in which the front fixing portion and the rear fixing portion protrude from both side surfaces of the battery case. According to the configuration, when the vehicle rolls over, the impact is less likely to be transmitted to the battery case, and the cells inside the battery case are protected.

A thirteenth aspect is directed to any one of the tenth aspect to the twelfth aspect, in which the front fixing portion is formed in a columnar shape which is long in a vehicle width direction. According to the configuration, the front fixing portion functions as a bridge, and the pair of side frames are coupled to each other by the front fixing portion, so that the rigidity of the vehicle body frame can be increased.

A fourteenth aspect is directed to any one of the tenth aspect to the thirteenth aspect, in which the rear fixing portion is formed in a columnar shape which is long in a vehicle width direction. According to the configuration, the rear fixing portion functions as a bridge, and the pair of side frames are coupled to each other by the rear fixing portion, so that the rigidity of the vehicle body frame can be increased.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A straddle-type vehicle (1) comprising:
a down frame (12) extending downward from a head pipe (11) at a vehicle body front portion;
a pair of side frames (13) connected to a lower portion of the down frame (12); and
a battery case (31) installed inside the pair of side frames (13),
wherein the pair of side frames (13) extend rearward from the down frame (12) and rise up obliquely rearward at a front side of the battery case (31),
wherein a pivot bracket (41) is provided midway in an extending direction of the pair of side frames (13), a swing arm (25) being supported by the pivot bracket (41),
wherein a suspension bracket (45) is provided at a rear portion of the pair of side frames (13), a rear suspension (28) being supported by the suspension bracket (45), and
wherein the pair of side frames (13) are coupled to each other via the battery case (31).

2. The straddle-type vehicle (1) according to claim 1,
wherein a front fixing portion (32) and a rear fixing portion (33) are provided at front and rear of the battery case (31), the front fixing portion (32) and the rear fixing portion (33) being fixed to the pair of side frames (13), and
wherein the pair of side frames (13) start to rise up in front of the front fixing portion (32).

3. The straddle-type vehicle (1) according to claim 2,
wherein the pair of side frames (13) are curved and rise up at a curved portion (17), and the curved portions of the pair of side frames (13) are coupled to each other via the front fixing portion (32).

4. The straddle-type vehicle (1) according to claim 3,
wherein a front bracket (34) protrudes upward from the curved portion (17) of the pair of side frames (13), the front fixing portion (32) being fixed to the front bracket (34), and
wherein a rear bracket (35) protrudes downward from an inclined portion (18) located rearward of the curved portion (17) of the pair of side frames (13), the rear fixing portion (33) being fixed to the rear bracket (35).

5. The straddle-type vehicle (1) according to claim 4,
wherein the pivot bracket (41) is provided at the curved portion (17) of the pair of side frames (13).

6. The straddle-type vehicle (1) according to claim 4,
wherein the pivot bracket (41) is located on a side opposite to the front bracket (34) with respect to the curved portion (17) of the pair of side frames (13).

7. The straddle-type vehicle (1) according to claim 4,
wherein the rear bracket (35) is located midway of the inclined portion (18) of the pair of side frames (13).

8. The straddle-type vehicle (1) according to claim 4,
wherein a lower surface of the battery case (31) is inclined along the pair of side frames (13).

9. The straddle-type vehicle according to claim 8,
wherein the lower surface of the battery case (31) is inclined more gently than the pair of side frames (13).

10. The straddle-type vehicle (1) according to claim 2,
wherein the front fixing portion (32) is provided at a front end of a lower surface of the battery case (31), and
the rear fixing portion (33) is provided at a rear end of the lower surface of the battery case (31).

11. The straddle-type vehicle (1) according to claim 10,
wherein the front fixing portion (32) protrudes from the front end of the lower surface of the battery case (31), and
the rear fixing portion (33) protrudes from the rear end of the lower surface of the battery case (31).

12. The straddle-type vehicle (1) according to claim 2,
wherein the front fixing portion (32) and the rear fixing portion (33) protrude from both side surfaces of the battery case (31).

13. The straddle-type vehicle (1) according to claim 12,
wherein the front fixing portion (32) is formed in a columnar shape that is long in a vehicle width direction.

14. The straddle-type vehicle (1) according to claim 12 or 13,
wherein the rear fixing portion (33) is formed in a columnar shape that is long in a vehicle width direction.
